# EUROPÄISCHE PATENTANMELDUNG

(11) **EP 2 633 931 A2**
(43) Veröffentlichungstag der Anmeldung: **04.09.2013**
(21) Anmeldenummer: 13150140.5
(22) Anmeldetag: 03.01.2013
(51) Int. Cl.: B23B 51/04, B28D 1/04

(54) **Bohrkrone**

(30) Priorität: 29.02.2012 DE 102012203088
(71) Anmelder: ROBERT BOSCH GMBH, 70442 Stuttgart (DE)
(72) Erfinder: Widmann, Rainer, 88285 Bodnegg (DE); Volz, Alexander, 88255 Baienfurt (DE)

(57) **Zusammenfassung**

Die Erfindung geht von einer Bohrkrone (1) aus, insbesondere für drehendes und/oder drehschlagendes Bohren von Gestein, Beton oder dergleichen, die einen zur Bohrseite offenen, zylindrischen Bohrkronenkörper (2) umfasst, wobei der Bohrkronenkörper (2) an seiner äußeren Mantelfläche eine Außenförderwendel zum Bohrmehltransport umfasst. Zur Erhöhung der Bohrgeschwindigkeit auch bei häufigem Einsatz der Bohrkrone (1) ist die erfindungsgemäße Außenförderwendel (8) aus Partikeln aus Hartstoffen und Verbindungsmitteln gefertigt.

## Beschreibung

Die Erfindung betrifft eine Bohrkrone für drehendes und/oder "drehschlagendes Bohren von vorzugsweise Gestein, Beton oder dergleichen sowie ein Verfahren zur deren Herstellung nach den Oberbegriffen der Ansprüche 1 und 10.

### Titel

### Bohrkrone

### Stand der Technik:

Aus der Druckschrift EP 0 730 082 B1 ist eine Bohrkrone für drehschlagendes Bohren von vorzugsweise Gestein, Beton oder dergleichen bekannt, wobei die Mantelfläche des Bohrkronenkörpers einen Steg mit einem wendelförmigen Verlauf aufweist, welcher eine Förderwendel bildet und mit dem Bohrköper einstückig verbunden ist. Diese Förderwendel dient dem Transport von Bohrmehl, das beim Bohrvorgang entsteht. Das Bohrmehl kann entsprechend über die Förderwendel aus dem Bohrloch hinaus befördert werden.

### Offenbarung der Erfindung

Der Erfindung liegt die Aufgabe zu Grunde, die Bohrgeschwindigkeit auch bei häufigem Einsatz der Bohrkrone erhöhen zu können.

Diese Aufgabe wird durch die Merkmale der unabhängigen Ansprüche 1 und 10 gelöst. Vorteilhafte und zweckmäßige Weiterbildungen der erfindungsgemäßen Bohrkrone sind in den abhängigen Ansprüchen angegeben.

Die Erfindung geht von einer Bohrkrone, insbesondere für drehendes und/oder drehschlagendes Bohren von Gestein, Beton oder dergleichen aus, die einen zur Bohrseite offenen, zylindrischen Bohrkronenkörper umfasst, wobei der Bohrkronenkörper an seiner äußeren Mantelfläche eine Außenförderwendel zum Bohrmehltransport umfasst.

Eine Bohrkrone umfasst im Wesentlichen einen zylindrischen Bohrkronenkörper, welcher in Bohrrichtung offen ausgebildet ist, einen Bohrkronenboden, der sich in Gegenüberstellung des offenen Endes am Bohrkronenkörper einstückig anschließt und einen sich daran einstückig anschließenden Bohrkronenschaft zur Befestigung in einer Bohrvorrichtung. Denkbar ist auch eine Verbindung über einen Konus oder eine Gewindeverbindung zum Bohrkronenschaft. Das offene Ende des Bohrkronenkörpers ist vorzugsweise stirnseitig mit Schneidzähnen bestückt.

Die auf der äußeren Mantelfläche des Bohrkronenkörpers angeordnete Außenförderwendel begünstigt die Ableitung des beim Bohren entstehenden Bohrmehls, welches sich vorzugsweise zwischen der äußeren Mantelfläche des Bohrkronenkörpers und der Innenwand der Bohrung bildet, um ein Blockieren der Bohrkrone während des Bohrvorgangs zu vermeiden.

Der Kern der Erfindung ist, dass die Außenförderwendel aus Partikeln aus Hartstoffen gefertigt ist.

Im Sinne der Erfindung ist unter einer aus Partikeln aus Hartstoffen gefertigten Außenförderwendel eine Wendel zu verstehen, die als wesentlichen und volumenmäßig größten Bestandteil Partikel aus Hartstoffen aufweist. Die Partikel sind über ein Verbindungsmittel an die Manteloberfläche des Bohrkronenkörpers gebunden, vorzugsweise gelötet oder geklebt.

Vorteil einer Außenförderwendel aus Partikeln aus Hartstoffen ist, dass diese ein Nachrüsten einer bestehenden Bohrkrone mit einer Außenförderwendel ermöglicht.

Zusätzlich kann eine eventuell beschädigte Außenförderwendel aus Partikeln aus Hartstoffen gegebenenfalls in einfacher Weise erneuert werden, indem die fehlenden Partikel wieder aufgefüllt werden, sodass eine kostengünstige Reparatur der Wendel ermöglicht wird.

Darüber hinaus bildet die aus Partikeln aus Harstoffen gefertigte Außenförderwendel einen Schutz für die Manteloberfläche der Bohrkrone gegen Verschleiß aus. Die Verschleißbeständigkeit ist deutlich höher als bei Stahl.

Weiterhin kann die Außenförderwendel aus Partikeln aus Hartstoffen kostengünstig hergestellt werden, da beispielsweise eine spanabhebende Bearbeitung der Bohrkrone zur Bildung einer Förderwendel nicht erforderlich ist.

Ein weiterer Vorteil ist, dass das Partikelmaterial der Förderwendel an das jeweilige Gesteinsmaterial angepasst werden kann, wobei die Förderwendel auf einem einheitlich hergestellten Bohrkronenkörper anzuordnen ist.

Zudem kann die aus Hartstoffpartikeln gefertigte Förderwendel einen Schleifeffekt aufgrund der rauen Oberfläche aus Partikel aufweisen, wobei die Partikel an der seitlichen Oberfläche des Bohrlochs schleifen können.

In einer bevorzugten Ausführungsform der Erfindung ist die Außenförderwendel als wellige Spirale ausgebildet. Die wellige Spiralform der Außenförderwendel erstreckt sich über ihren gesamten Verlauf auf der Manteloberfläche des Bohrkronenkörpers, wodurch zwischen den Wendelgängen zusätzlicher Raum zur Aufnahme des Bohrmehls gebildet wird. Darüber hinaus bildet eine wellige Spirale zusätzliche Bewegungsfreiheit für das transportierte Bohrmehl, auch senkrecht zur eigentlichen Transportrichtung. Dadurch kann eine Verfestigung des Bohrmehls vermieden werden, im Besonderen wenn das Bohrmehl eine feinkörnige Struktur aufweist.

Variable Fördergeschwindigkeiten halten das Bohrmehl dabei besser in Bewegung.

In einer überdies bevorzugten Ausführungsform der Erfindung weist die Außenförderwendel wenigstens eine Unterbrechung in ihrem Verlauf auf. Durch diese Unterbrechungen wird die Förderwendel in einzelne Wendelabschnitte unterteilt. Die Unterbrechungen im Verlauf der Außenförderwendel bilden einen weiteren Weg zur Ableitung des Bohrmehls, wodurch insbesondere eine größere Menge des entstehenden Bohrmehls aus dem Bohrloch herausgeführt werden kann (ähnlich wie ein Bypass).

Weiterhin ist es in einer bevorzugten Ausführungsform der Erfindung vorgesehen, dass die Breite der Außenförderwendel wenigstens abschnittsweise zu- oder abnimmt. Das Bohrmehl kann aufgrund einer senkrecht zur Transportrichtung entstehenden Bewegung kontinuierlich in Bewegung gehalten werden, wodurch beispielsweise eine Blockade der Bohrkrone während des Bohrvorgangs durch ein Verdichten des Bohrmehls vermieden werden kann.

In einer weiteren, bevorzugten Ausführungsform der Erfindung sind stirnseitig an der Bohrseite der Bohrkrone Zähne zum schneidenden Eingriff in das zu bearbeitende Material beim Bohren angeordnet. Die Bohrkrone weist im Endbereich ihrer Bohrseite vorzugsweise einen Kragenbund auf, dessen Außendurchmesser den Außendurchmesser der Manteloberfläche der Bohrkrone überragt. In diesem Kragenbund werden je nach Verwendung der Bohrkrone zueinander beabstandete Zähne angeordnet. Die den Zahn umlaufenden Schneidkanten sind in Drehrichtung der Bohrkrone gerichtet. Der Zahn kann in vorteilhafter Weise mehrere Schneidkanten aufweisen, um einen zeitgleichen Materialabtrag in axialer und in radialer Richtung zur Bohrachse ausführen zu können. Die Schneidgeometrie der Zähne ermöglicht die Herstellung einer maßgenauen Bohrung in einem Gesteinsmaterial.

Überdies ist es in einer weiteren, bevorzugten Ausführungsform der Erfindung vorgesehen, dass wenigstens einer der Zähne aus aufgetragenen Hartstoffpartikeln gefertigt ist. Die Zusammensetzung eines Zahnes entspricht im Wesentlichen der Zusammensetzung der Außenförderwendel aus Partikeln aus Hartstoffen. Die Hartstoffpartikel werden beispielsweise in der Form eines Schneidzahnes auf der Stirnfläche des Bohrkronenkörpers angeordnet. Dabei bildet jeder Hartstoffpartikel ergänzend zu den Schneidkanten des Zahnes weitere Schneidkanten, wodurch ein Verschleiß des Zahnes vermindert werden kann.

In einer überdies bevorzugten Ausgestaltung der Erfindung ist es vorgesehen, dass die Partikel vorzugsweise aus einem Hartmetallsplitt, vorzugsweise Wolframkarbid und/oder aus Diamant als Hartstoff ausgebildet sind. Der als Partikel eingesetzte Hartstoff wird vorzugsweise auf das zu bohrende Gesteinsmaterial abgestimmt, wobei ein aus Diamantpartikeln aufweisender Hartstoff in vorteilhafter Weise für harte Gesteinsmaterialien, wie z. B. Granit verwendet werden kann. Aufgrund der hier eingesetzten Partikelmaterialien (Wolframkarbid und/oder Diamant) kann das Material des Hartstoffes an das zu bohrende Material angepasst werden, wodurch der Verschleiß einer aus Diamantpartikeln gefertigten Außenförderwendel bzw. Schneidzähne vermindert werden kann.

Eine weitere, bevorzugte Ausführungsform der Erfindung sieht vor, dass die Hartstoffpartikel stoffschlüssig mit dem Bohrkronenkörper verbunden sind. Unter einer stoffschlüssigen Verbindung wird im Sinne der Erfindung eine durch atomare oder molekulare Kräfte gehaltene Verbindung verstanden. Die stoffschlüssige Verbindung bildet einen ausreichenden Halt der Hartstoffpartikel auf der Manteloberfläche der Bohrkrone, wobei die Verbindung durch eine Zerstörung des Verbindungsmittels gelöst werden kann.

In einer überdies bevorzugten Ausgestaltung der Erfindung ist vorgesehen, dass die Hartstoffpartikel aufgelötet und/oder aufgeklebt sind. Die Partikel können auch mittels eines sogenannten CMT-Prozesses (cold-metal transfer) mit der Bohrkrone verbunden sein. Bei einem Kalt-Metall-Transfer-Schweißverfahren (CMT-Prozess) ist der Schweißprozess durch zyklische Abwechslung einer Lichtbogenphase und einer Kurzschlussphase definiert, wobei während einer Lichtbogenphase ein Schweißdraht bis zur Berührung mit dem Werkstück in Richtung Werkstück bewegt wird, anschließend nach Bildung eines Kurzschlusses während der Kurzschlussphase die Drahtförderung umgekehrt und der Schweißdraht vom Werkstück wegbewegt wird, wobei der Schweißstrom und/oder die Schweißspannung während der Lichtbogenphase derart geregelt wird, dass der Schweißdraht angeschmolzen und ein Tropfen gebildet wird, und dass während der Kurzschlussphase ein Öffnen des Kurzschlusses über den Schweißstrom unterbunden wird, wobei zur Festlegung des Schweißprozesses Schweißparameter eingestellt werden. Grundsätzlich können verschiedene Ausführungen von CMT-Verfahren eingesetzt werden. Entsprechend der vorgenannten Ausführungsform einer Bohrkrone mit stoffschlüssig mit dem Bohrkronenkörper verbundenen Hartstoffpartikeln kann das Verbindungsmittel zwischen den Hartstoffpartikeln und der Manteloberfläche der Bohrkrone als Lotpaste beziehungsweise als Klebstoff, ausgebildet werden. Beide Verbindungsmittel, die Lotpaste als auch der Klebstoff können maschinell auf die Manteloberfläche des Bohrkronenkörpers aufgetragen werden, wodurch eine automatisierte und kostengünstige Herstellung einer Außenförderwendel aus Hartstoffpartikeln ermöglicht wird.

Die Stirnseite könnte ebenfalls mit Hartstoffteilchen gegen Verschleiß geschützt werden. Entsprechend kann auf der Stirnseite der Bohrkrone zum Beispiel zwischen den Zähnen eine Schicht angeordnet sein, die aus Hartstoffpartikeln und den entsprechenden Verbindungsmittel gefertigt ist. Diese Partikelschicht kann sich über die gesamte Stirnseite erstrecken, sie kann aber auch nur abschnittsweise vorhanden sein, zum Beispiel zwischen einzelnen Zähnen.

In einem weiteren Aspekt der Erfindung ist ein Verfahren zur Herstellung einer Bohrkrone mit einer Außenförderwendel zum Bohrmehltransport, insbesondere für drehendes und/oder drehschlagendes Bohren von Gestein, Beton oder dergleichen vorgesehen.

Dabei umfasst das Verfahren zur Herstellung einer erfindungsgemäßen Bohrkrone, die Fertigung eines zur Bohrseite offenen, zylindrischen Bohrkronenkörpers, das Auftragen von Verbindungspaste zum Herstellen einer stoffschlüssigen Verbindung von Partikeln und vom Bohrkronenkörper auf der äußeren Mantelfläche des Bohrkronenkörpers in Form des Verlaufs einer Außenförderwendel, das Aufbringen von Hartstoffpartikeln, insbesondere Hartmetallsplitt vorzugsweise von Partikeln aus Wolframkarbid, und/oder von Diamantpartikeln im Bereich der aufgetragenen Verbindungspaste.

Die Hartstoffpartikel haften zunächst in der Form einer Förderwendel in einer auf der Manteloberfläche des Bohrkronenkörpers angeordneten Lotpaste. Durch Erwärmung wird anschließend eine stoffschlüssige Verbindung hergestellt.

Die aufgetragene Partikelschicht kann ein- oder mehrschichtig ausgebildet sein bzw. im Verlauf der Wendel zwischen einer ein- oder mehrschichtigen Ausführungsform wechseln. Die einschichtige Ausführungsform einer Förderwendel bildet einen verbesserten Halt der Partikel auf der Manteloberfläche des Bohrkronenkörpers, wobei eine mehrschichtige Ausführungsform der Förderwendel den Raum zwischen Bohrkrone und der Innenwand einer Bohrung zur Aufnahme des Bohrmehls vergrößert.

Aufgrund des erfindungsgemäßen Verfahrens zur Herstellung einer erfindungsgemäßen Bohrkrone kann durch eine verbesserte Ableitung des Bohrmehls aufgrund der auf der Manteloberfläche angeordneten Außenförderwendel aus Hartstoffpartikeln die Bohrgeschwindigkeit auch bei häufigem Einsatz erhöht werden. Darüber hinaus kann aufgrund des erfindungsgemäßen Verfahrens eine einfache Form- und/oder Materialanpassung der Förderwendel an das zu bohrende Gesteinsmaterial ausgeführt werden.

Weiterhin kann die erfindungsgemäße Außenförderwendel nachträglich auf bestehende Bohrkronen aufgetragen werden.

Die Erfindung wird anhand eines Ausführungsbeispiels einer erfindungsgemäßen Bohrkrone in nachfolgenden Zeichnungen dargestellt und unter Angabe weiterer Vorteile und Einzelheiten in der folgenden Beschreibung näher erläutert.

Es zeigen:
- Figur 1: eine Bohrkrone mit Förderwendel aus Hartstoffpartikeln im Schnitt;
- Figur 2: eine Bohrkrone nach Figur 1 mit sich ändernde Förderwendelbreite;
- Figur 3: eine Bohrkrone nach Figur 1 mit einer abschnittsweisen Zu- bzw. Abnahme der Förderwendelbreite;
- Figur 4: Eine Bohrkrone nach Figur 1 mit einem wellenförmigen Verlauf der Förderwendel;
- Figur 5: eine Bohrkrone nach Figur 1 mit sich kontinuierlich veränderten Breite im Verlauf der Förderwendel und
- Figur 6: Eine Bohrkrone nach Figur 1 mit teilweise unterbrochener Förderwendel.

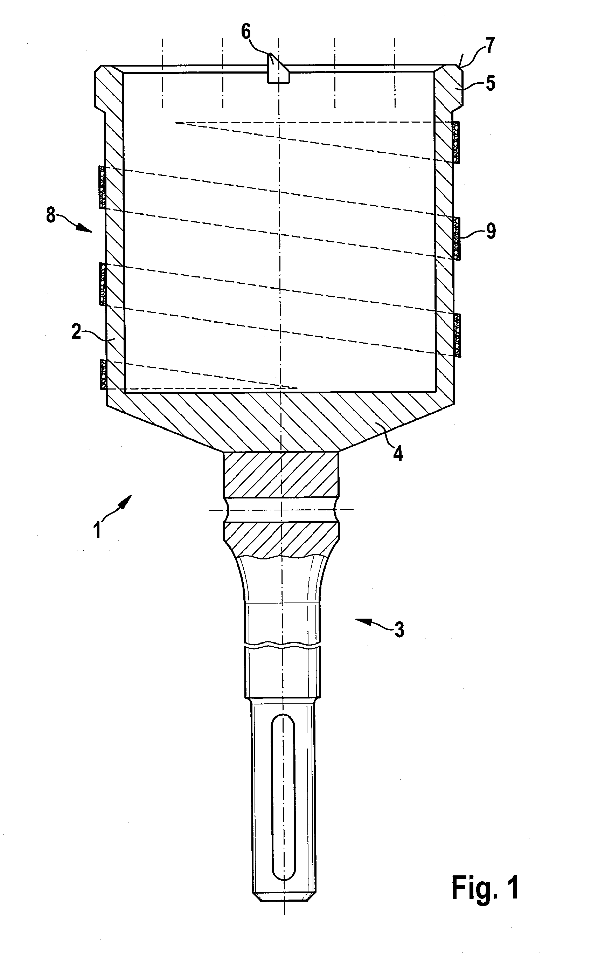

Figur 1 zeigt eine erfindungsgemäße Bohrkrone 1 in einer Teilschnittdarstellung, wobei die Bohrkrone 1 einen Bohrkronenkörper 2 und einen Bohrkronenschaft 3 umfasst, welche in der hier dargestellten Ausführungsform einstückig miteinander verbunden sind. Eine Bohrkrone umfasst im Wesentlichen einen vorzugsweise gehärteten Bohrkronenkörper, der an einem ersten Ende offen ausgebildet ist und an einem zweiten Ende mittels eines sich radial erstreckenden Bohrkronenbodens verschlossen ist. Am offenen Ende des Bohrkronenkörpers sind vorzugsweise stirnseitig mehrere voneinander beabstandete Schneidzähne aus Hartmetall angeordnet. An den Bohrkronenboden schließt sich in axialer Richtung ein Bohrkronenschaft mit einer Werkzeugaufnahme zur Befestigung der Bohrkrone in einer Bohrvorrichtung an. Das Herstellen von Bohrungen in harten Materialien, wie z. B. Gestein bzw. Beton stellt an derartige Bohrkronen hohe Anforderungen dar, wobei der Verschleiß der verwendeten Bohrkrone und den Schneidzähnen möglichst gering zu halten ist.

Bohrkronen können in einer Vielzahl unterschiedlicher Fertigungsverfahren hergestellt werden, wie zum Beispiel in einer spanabhebenden Bearbeitung, im Pressverfahren oder im Gießverfahren.

Der Bohrkronenkörper 2 ist aus einem rotationssymmetrischen Zylinder gebildet, und mittels eines Bohrkronenbodens 4 in der zum Bohrkronenschaft 3 weisenden Richtung mit diesem einstückig verbunden. Das dem Bohrkronenboden 4 gegenüberliegende Ende des Bohrkronenkörpers 2 ist offen ausgebildet.

Im Endbereich des offen ausgebildeten Ende des Bohrkronenkörpers 2 weist die Bohrkrone 1 einen umlaufenden Kragenbund 5 auf, welcher in dem hier gezeigten Ausführungsbeispiel zur Aufnahme von mindestens einem Schneidzahn 6 zur Herstellung einer Bohrung in vorzugsweise Gestein, Beton oder dergleichen ausgebildet ist. Der Schneidzahn 6 kann aus Hartmetall oder aus Hartstoffpartikel hergestellt werden und kann mehrere den Schneidzahn umlaufende Schneidkanten aufweisen, wenn die Breite des Schneidzahnes 6 das Dickenmaß des Kragenbundes 5 überragt.

Es ist denkbar, dass die am offenen Ende des Bohrkronenkörpers 2 angeordnete Stirnfläche 7 bzw. der sich anschließende Kragenbund 5 zusätzlich mit Hartstoffpartikeln bestückt ist, um die Schneidwirkung zu verstärken. Auch die Kombination von Schneidzähnen 6 mit entsprechenden Hartstoffpartikeln wird vom Gegenstand der Erfindung umfasst.

Der Bohrkronenkörper 2 weist auf seiner äußeren Manteloberfläche unterhalb des Kragenbundes 5 eine auf der Manteloberfläche umlaufende Außenförderwendel 8 auf, welche aus Partikeln 9 aus Hartstoffen gefertigt ist.

Die Hartstoffpartikel 9 sind in dem hier gezeigten Ausführungsbeispiel nach Figur 1 mittels einer Lotpaste auf die Manteloberfläche des Bohrkronenkörpers 2 aufgetragen und bilden mit der Manteloberfläche des Bohrkronenkörpers 2 eine stoffschlüssige Verbindung. Hierzu wird die Lotpaste, bestehend aus einem Hartlotmittel und ein Bindemittel erwärmt, wobei das verflüssigte Hartlotmittel eine Verbindung zwischen Manteloberfläche und den Hartstoffpartikeln bildet.

Als weitere Ausführungsform einer stoffschlüssigen Verbindung der Hartstoffpartikel 9 können diese mittels eines Klebstoffes, beispielsweise eines selbstaushärtenden Zweikomponenten-Klebstoffes, auf die Manteloberfläche des Bohrkronenkörpers 2 aufgetragen werden. Es ist denkbar, dass zur Herstellung einer stoffschlüssigen Verbindung der Partikel aus Hartstoffen mit der Manteloberfläche des Bohrkronenkörpers 2 weitere Verbindungsmittel einsetzbar sind.

Der Steigungswinkel der Außenförderwendel 8 kann an die jeweilige Anwendung der Bohrkrone 1 angepasst werden, wodurch das Bohren von unterschiedlichen Gesteinsmaterialien ermöglicht wird.

Auch die Breite der Außenförderwendel 8 sowie die Oberflächenform und die Wendelform in Verlaufsrichtung der Außenförderwendel 8 kann an die jeweilige Arbeitsaufgabe der Bohrkrone 1 angepasst werden. Durch die erfindungsgemäße Außenförderwendel 8, welche aus Hartstoffpartikeln 9 gefertigt ist und mittels eines entsprechenden Verbindungsmittels, wie z. B. Lotpaste oder Klebstoff auf die Manteloberfläche des Bohrkronenkörpers 2 aufgetragen ist, kann eine automatisierte Herstellung einer Außenförderwendel auf Hartstoffpartikeln 9 ausgeführt werden, wodurch eine kostengünstige Herstellung einer Bohrkrone 1 ermöglicht wird.

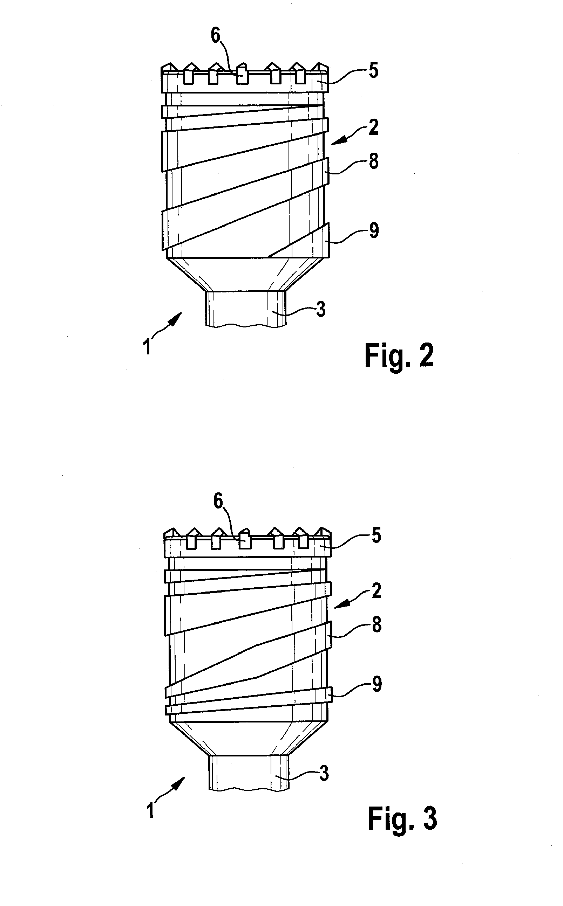

In Figur 2 ist eine Ausführungsform einer Bohrkrone 1 gezeigt, welche auf ihrer Manteloberfläche des Bohrkronenkörpers 2 eine umlaufende Außenförderwendel 8 aufweist, welche aus Hartstoffpartikeln 9 gefertigt ist. Die Außenförderwendel 8 weist in ihrem Verlauf unterschiedliche Breitenmaße auf, die eine Abfuhr des beim Bohren entstehenden Bohrmehls begünstigen, beispielsweise beim Bohren von unterschiedlichen Gesteinsmaterialien.

In Figur 3 ist eine Bohrkrone 1 nach Figur 1 gezeigt, wobei die umlaufende Außenförderwendel 8 in ihrem Verlauf abschnittsweise zu- bzw. abnimmt. Diese Zu- bzw. Abnahme der Breite der Außenförderwendel 8 dient zur verbesserten Ableitung des beim Bohren der Bohrkrone 1 entstehenden Bohrmehls aus der Bohrung heraus.

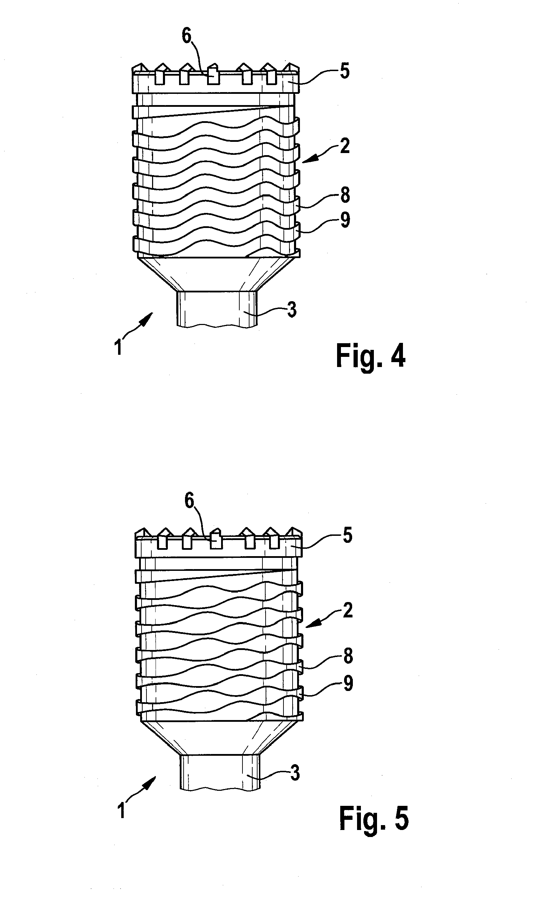

In Figur 4 und 5 werden jeweils ein Ausführungsbeispiel einer Bohrkrone gezeigt, wobei auf dem jeweiligen Bohrkronenkörper 2 der Bohrkrone 1 eine Außenförderwendel 8 aus Hartstoffpartikeln 9 aufgetragen ist, die in ihrem Verlauf wellenförmig bzw. mit ballonartiger Verdickung der Förderwendel ausgebildet ist. Diese beiden Verlaufsformen der Außenförderwendel 8 auf der Manteloberfläche des Bohrkronenkörpers 2 begünstigen die Ableitung von beim Bohren entstehenden Bohrmehls, welches sich aufgrund einer äußert geringen Partikelgröße des Bohrmehls zu stark verdichten könnte und zu einer eventuellen Blockade der Bohrkrone 1 durch nicht abgeführtes Bohrmehl führt. Im Besonderen sind die in den Figuren 4 und 5 gezeigten Bohrkronen 1 zum Bohren von Gesteinen mit unterschiedlichen Strukturen bzw. von unterschiedlichen Gesteinsarten in vorteilhafter Weise geeignet.

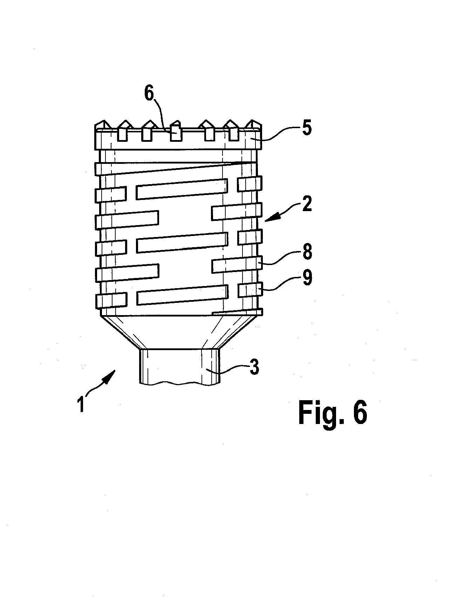

In Figur 6 ist eine erfindungsgemäße Bohrkrone 1 mit einer Außenförderwendel 8 aus Hartstoffpartikeln 9 gezeigt, welche in ihrem Verlauf abschnittsweise Unterbrechungen aufweist. Diese Unterbrechungen unterteilen die Außenförderwendel 8 in einzelne Außenförderwendelabschnitte und bilden zusätzliche Wege und Raum für das Bohrmehl. Aufgrund dieser Unterbrechungen kann das beim Bohren gebildete Bohrmehl während der Rotationsbewegung der Bohrkrone 1 über die zusätzlich gebildeten Wege aus der Bohrung ausgeleitetet werden. Dies ist vorteilhaft, wenn beispielsweise eine große Menge von Bohrmehl aus dem Bohrloch herauszuleiten ist. Grundsätzlich können beliebige Wendelformen durch Herstellungsverfahren gemäß der Erfindung gefertigt werden.

## Patentansprüche

1. Bohrkrone (1), insbesondere für drehendes und/oder drehschlagendes Bohren von Gestein, Beton oder dergleichen, die einen zur Bohrseite offenen, zylindrischen Bohrkronenkörper (2) umfasst, wobei der Bohrkronenkörper (2) an seiner äußeren Mantelfläche eine Außenförderwendel (8) zum Bohrmehltransport umfasst, **dadurch gekennzeichnet, dass** die Außenförderwendel (8) aus Partikeln aus Hartstoffen und einem Verbindungsmittel zum Binden der Hartstoffpartikel an die Mantelfläche des Bohrkronenkörpers gefertigt ist.

2. Bohrkrone (1) nach Anspruch 1, **dadurch gekennzeichnet, dass** die Außenförderwendel (8) als wellige Spirale ausgebildet ist.

3. Bohrkrone (1) nach einem der vorgenannten Ansprüche, **dadurch gekennzeichnet, dass** die Außenförderwendel (8) wenigstens eine Unterbrechung in ihrem Verlauf aufweist.

4. Bohrkrone (1) nach einem der vorgenannten Ansprüche, **dadurch gekennzeichnet, dass** die Breite der Außenförderwendel (8) wenigstens abschnittsweise zu- oder abnimmt.

5. Bohrkrone (1) nach einem der vorgenannten Ansprüche, **dadurch gekennzeichnet, dass** stirnseitig an der Bohrseite der Bohrkrone (1) Zähne (6) zum schneidenden Eingriff in das zu bearbeitende Material beim Bohren angeordnet sind.

6. Bohrkrone (1) nach einem der vorgenannten Ansprüche, **dadurch gekennzeichnet, dass** zwischen den Zähnen wenigstens abschnittsweise eine Schicht, die aus Hartstoffen und einem Verbindungsmittel gefertigt ist, angeordnet ist.

7. Bohrkrone (1) nach einem der vorgenannten Ansprüche, **dadurch gekennzeichnet, dass** wenigstens einer der Zähne (6) aus aufgetragenen Hartstoffpartikeln gefertigt ist.

8. Bohrkrone (1) nach einem der vorgenannten Ansprüche, **dadurch gekennzeichnet, dass** die Partikel aus wenigstens einem der folgenden Hartstoffe ausgebildet sind:
- aus Hartmetallsplitt, vorzugsweise aus Wolframkarbid,
- aus Diamant.

9. Bohrkrone (1) nach einem der vorgenannten Ansprüche, **dadurch gekennzeichnet, dass** die Hartstoffpartikel stoffschlüssig mit dem Bohrkronenkörper (2) verbunden sind.

10. Bohrkrone (1) nach einem der vorgenannten Ansprüche, **dadurch gekennzeichnet, dass** die Hartstoffpartikel aufgelötet und/oder aufgeklebt und/oder im Cold-Metal-Transfer-Verfahren (CMT-Verfahren) angebunden sind.

11. Verfahren zur Herstellung einer Bohrkrone (1) mit Außenförderwendel (8) zum Bohrmehltransport, insbesondere für drehendes und/oder drehschlagendes Bohren von Gestein, Beton oder dergleichen, **dadurch gekennzeichnet, dass** das Verfahren folgende Schritte umfasst:
- Fertigung eines zur Bohrseite offenen, zylindrischen Bohrkronenkörpers (2),
- Auftragen von Verbindungspaste zum Herstellen einer stoffschlüssigen Verbindung von Partikeln und vom Bohrkronenkörper (2) auf der äußeren Mantelfläche des Bohrkronenkörpers (2) in Form des Verlaufs einer Außenförderwendel (8),
- Aufbringen von Hartstoffpartikeln, insbesondere von Hartmetallsplitt, vorzugsweise von Partikeln aus Wolframkarbid, und/oder von Diamantpartikeln, im Bereich der aufgetragenen Verbindungspaste.
